# EUROPEAN PATENT SPECIFICATION

(11) **EP 1 134 235 B1**
(45) Date of publication and mention of the grant of the patent: **21.07.2010**
(21) Application number: 00302214.2
(22) Date of filing: 17.03.2000
(51) Int. Cl.: C08F 10/00, C08F 4/70, C07F 15/00, C07F 9/58

(54) **Group 8, 9 or 10 olefin copolymerization catalyst**
Gruppe 8, 9 oder 10 Olefinpolymerisationskatalysatoren
Catalyseur pour la polymérisation d'oléfines des groupes 8, 9 ou 10

(43) Date of publication of application: 19.09.2001
(73) Proprietor: Nova Chemicals (International) S.A., 1700 Fribourg (CH)
(72) Inventor: Xu, Wei, Calgary, Alberta T2E 6A8 (CA); Wang, Qinyan, Calgary, Alberta T3K 4J3 (CA)
(74) Representative: Harrison, David Christopher

(56) References cited:
- WO-A-98/27124
- CALHOUN, H. P. ET AL: "Complexes of dimethylaminophosphazenes with metal ions" CAN. J. CHEM. (1975), 53(12), 1765-74 , XP000913462

## Description

The present invention relates to late transition metal complexes, a process for their preparation and their use in the polymerization of olefins.

The papers in Organometallics, 10, 1421-1431, 1991; Inorg. Chem., 34, 4092-4105, 1995; J. Organomet. Chem., 527(1-2), 263-276, 1997; and Inorg. Chem., 35(6), 1518-28, 1996, report the reaction of bis (iminophosphoranyl) methane (BIPM) which are typically aryl substituted on the phosphorus atom and the nitrogen with Group 8, 9 or 10 metal halides (chlorides) further comprising at least two weakly-coordinating ligands (L) such as nitriles or cyclooctadiene, afforded several products depending on the reaction time, type of ligand or nature of the metal. The product could be a N-C chelating type product or a N-N chelating product (similar to those of the present invention).

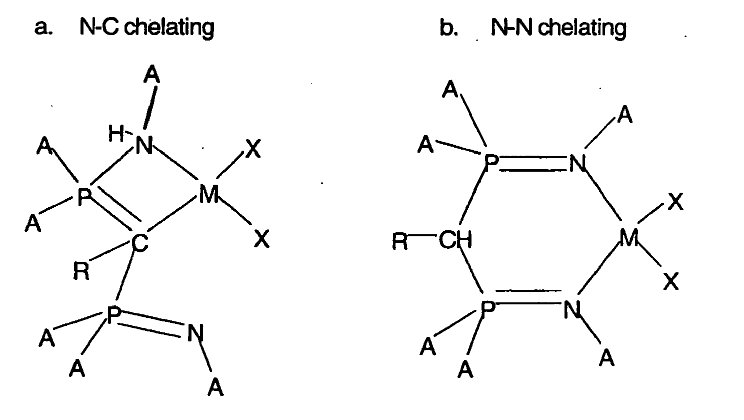

The products contain alkyl bridges between the phosphinimine groups and the references do not disclose the pyridyl bridged compounds of the present invention. Further, none of the references teach or suggest the use of such compounds for the polymerization of alpha olefins.

United States Patent 5,557,023 issued September, 1996 teaches the use of some phosphinimines complexes to oligomerize alpha olefins. However, the complexes disclosed are not bisphosphinimine complexes. Rather, the complexes are of the structure indicated below. 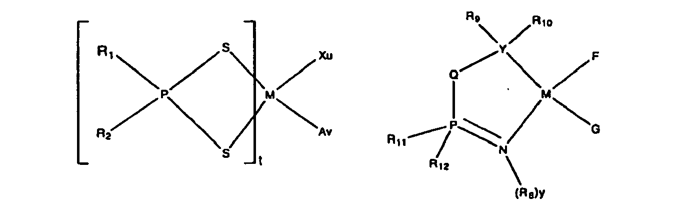 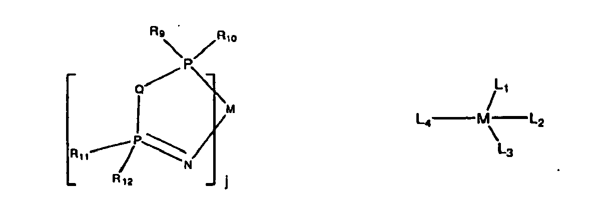 wherein R, Q, etc. are as defined in the patent. The structures disclosed in the patent are not the bisphosphinimines of the present invention. While the reference does teach oligomerization, it does not suggest polymerization.

WO 98/30609 patent application published July 16, 1998 assigned to E.I. du Pont de Nemours teaches the use of various complexes of nickel to polymerize alpha olefins. The most structurally similar complex in the disclosure is compound XXXXI at the middle of page 9 and the associated description of the various substituents. However, the compound does not contain a pyridyl bridge. Rather, the nickel atom completes the cyclic structure in the middle of the compound. The reference does not contemplate or disclose compounds of the present invention which have a pyridyl bridge between the bisphosphinimine functionality. The reference fails to disclose the subject matter of the present invention.

There are a number of patents and papers by Brookhart and/or Gibson disclosing the use of Group 8, 9 or 10 metals to polymerize olefins. However, such papers did not teach the copolymerizations (e.g. WO 98/27124). The present invention provides olefin copolymerization using an iron based catalyst.

The present invention provides a process for the polymerization of one or more C₂₋₁₂ alpha olefins in the presence of an activatable complex of a Group 8, 9 or 10 metal and ligand of formula I: 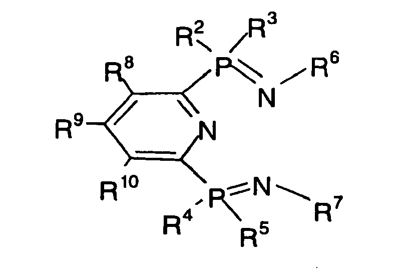 wherein R², R³, R⁴ and R⁵ are independently selected from the group consisting of a C₁₋₁₀ alkyl radical and a phenyl radical; R⁶ and R⁷ are independently selected from the group consisting of a tri C₁₋₆ silyl radicals ; and R⁸, R⁹ and A¹⁰ are independently selected from the group consisting of a hydrogen atom, and a C₁₋₄ alkyl.

A further aspect of the present invention provides a process for the polymerization of one or more C₂₋₁₂ alpha olefins in the presence of:
(a) a complex comprising a Group 8, 9 or 10 metal (M) and ligand of formula as defined above;
(b) an activator at a temperature from 20 to 250°C and at a pressure from 103.4 to 103,400 KPa (15 to 15000 psi)

In a further aspect, the present invention provides a process for reacting one or more C₂₋₁₂ alpha olefins in the presence of a catalyst of formula III: 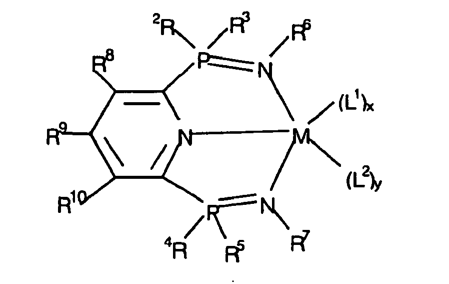 wherein R² to R¹⁰ and M are defined above; L¹ is a neutral monodentate ligand; x is from 0 to 12; L² is an activatable ligand selected from the group consisting of hydrogen, halogen, C₁₋₁₀ hydrocarbyl radical and C₁₋₁₀ alkoxy radical and y is equal to the oxidation state of the metal; with an activator at a temperature from 20 to 250°C and at a pressure from 15 to 15000 psi.

The phrase "a neutral monodentate ligand" means a ligand which is only loosely bound to the metal by a coordinative bond. These may include water (H₂O) or tetrahydrofuran (THF).

As used in this specification, an activatable ligand is a ligand removed or transformed by an activator. These include anionic substituents and/or bound ligands. Exemplary activatable ligands are independently selected from the group consisting of a hydrogen atom, a halogen atom, a C₁₋₁₀ hydrocarbyl radical, a C₁₋₁₀ alkoxy radical; each of which said hydrocarbyl and alkoxy radicals may be unsubstituted by or further substituted by a halogen atom, a C₁₋₈ alkyl radical, a C₁₋₈ alkoxy radical, a C₆₋₁₀ aryl or aryl oxy radical, an amido radical which is unsubstituted or substituted by up to two C₁₋₈ alkyl radicals, and a phosphido radical which is unsubstituted or substituted by up to two C₁₋₈ alkyl radicals.

In the above compounds formula I and III, R², R³, R⁴ and R⁵ are independently selected from the group consisting of C₁₋₁₀ alkyl or phenyl radicals, preferably C₁₋₄ radicals such as a bulky t-butyl radical and phenyl radicals. In the above compounds, R⁸, R⁹ and R¹⁰ are independently selected from the group consisting of a hydrogen atom and C₁₋₄ alkyl radical. In the above formula, R⁶ and R⁷ are independently selected from the group consisting of C₁₋₁₆ alkyl silyl, most preferably tri C₁₋₄ silyl radicals. In the complex of formula III, R² through R¹⁰ are as defined above and L¹ is a neutral monodentate ligand . L² is an activatable ligand, preferably a halogen or a C₁₋₆ alkyl or alkoxide radical, most preferably a chloride, bromide, or a C₁₋₄ alkyl or alkoxide radical; x is from 0 to 12, preferably from 0 to 6; and y is the oxidation state of the metal M, preferably 2 or 3.

In the compound of formula I and III, preferably R⁸, R⁹ and R¹⁰ are independently selected from the group consisting of a hydrogen atom or a C₁₋₄ alkyl radical; R⁴, R⁵, R² and R³ are independently selected from the group consisting of a C₁₋₁₀ alkyl radical ; R⁶ and R⁷ are independently selected from the group consisting of trimethyl silyl. In a particularly preferred aspect of the present invention R⁸, R⁹ and R¹⁰ are the same; R², R³, R⁴ and R⁵ are the same; and R⁶ and R⁷ are the same.

The metal complexes of the present invention may be prepared by reacting the ligand with a compound of MXₙ • A (H₂O) X, wherein X may be selected from the group consisting of halogen, C₁₋₆ alkoxide, nitrate or sulfate, preferably halide and most preferably chloride or bromide; and A is 0 or an integer from 1-6.

The reaction of the ligand of formula I with the compound of the formula MXₙ • A (H₂O) may be conducted in a hydrocarbyl solvent at temperature from -50 to 250°C, preferably from 20 to 120°C.

The resulting compound may then be alkylated (either partially or fully). Some alkylating agents are Grignard agents of the formula RMgX and organolithium reagents LiR wherein R is a C₁₋₁₀ alkyl radical and X is a halogen and alkyl aluminum reagents. Alkyl aluminum reagents include trialkyl aluminum, alkyl aluminum halides (i.e. (R)ₓALX₃₋ₓ wherein R is a C₁₋₁₀ alkyl radical, X is a halogen, x is 1 or 2 and MAO as described below).

Solution polymerization processes are fairly well known in the art. These processes are conducted in the presence of an inert hydrocarbon solvent typically a C₅₋₁₂ hydrocarbon which may be unsubstituted or substituted by C₁₋₄ alkyl group such as pentane, hexane, heptane, octane, cyclohexane, methylcyclohexane or hydrogenated naphtha. An additional solvent is Isopar E (C₈₋₁₂ aliphatic solvent, Exxon Chemical Co.).

The polymerization may be conducted at temperatures from 20 to 250°C. Depending on the product being made, this temperature may be relatively low such as from 20 to 180°C. The pressure of the reaction may be as high as 103,400 KPa (15,000 psig) for the older high pressure processes or may range from 103,4 to 31,026 KPa (15 to 4500 psig.)

Suitable olefin monomers may be ethylene and C₃₋₁₂ alpha olefins which are unsubstituted or substituted by up to two C₁₋₆ alkyl radicals. Illustrative non-limiting examples of such alpha-olefins are one or more of propylene, 1-butene, 1-pentene, 1-hexene, 1-octene and 1-decene.

The reaction product of the present invention, in the presence of a single alpha olefin, may be an oligomer having a molecular weight (Mw) less than 1500. The reaction product of the present invention may also be a co- or homopolymer of one or more alpha olefins. The polymers prepared in accordance with the present invention have a good molecular weight. That is, weight average molecular weight (Mw) will preferably be greater than 50,000 ranging up to 10⁷, preferably 10⁵ to 10⁷.

The polyethylene polymers which may be prepared in accordance with the present invention typically comprise not less than 60, preferably not less than 70, most preferably not less than 80 weight % of ethylene and the balance of one or more C₄₋₁₀ alpha olefins, preferably selected from the group consisting of 1-butene, 1-hexene and 1-octene. The polyethylene prepared in accordance with the present invention may contain branching (e.g. one or more branches per 1000 carbon atoms, preferably 1-30 branches per 1000 carbon atoms, typical 1-20 branches per 1000 carbon atoms and most preferably 1-10 branches per 1000 carbon atoms).

The activator is selected from the group consisting of:
(i) an aluminoxane; and
(ii) an activator capable of ionizing the Group 8, 9 or 10 metal complex (which may be used in combination with an alkylating activator).

The aluminoxane activator is of the formula (R²⁰)₂AlO(R²⁰AkO)mAl(R²⁰)₂ wherein each R²⁰ is independently selected from the group consisting of C₁₋₂₀ hydrocarbyl radicals, m is from 5 to 30. and preferably R²⁰ is a C₁₋₄ alkyl radical. The aluminoxane activator may be used prior to the reaction but preferably *in situ* alkylation is typical (e.g. alkyl groups replacing leaving ligands, hydrogen or halide groups).

If the Group 8, 9 or 10 metal complex is activated only with aluminoxane, the amount of aluminoxane will depend on the reactivity of the alkylating agent. Activation with aluminoxane requires a molar ratio of aluminum in the activator to the Group 8, 9 or 10 metal in the complex from 20:1 to 1000:1. MAO may be the higher end of the above noted range.

The activator of the present invention may be a combination of an alkylating activator in combination with an activator capable of ionizing the Group 8, 9 or 10 complex.

The alkylating activator is, (R)ₛAlX₃₋ₛ wherein each R is independently selected from the group consisting of C₁₋₈ alkyl radicals , X is halogen and s is 0 or an integer from 1 to 3. Preferably, in the above compounds R is a C₁₋₄ alkyl radical and X is chlorine. Commercially available compounds include triethyl aluminum (TEAL) and diethyl aluminum chloride (DEAC).

The activator capable of ionizing the Group 8, 9 or 10 metal complex is an anion of the formula [B(R¹⁸)₄]⁻ derived from compounds of the formula [R¹⁵]⁺ [B(R¹⁸)₄]⁻ wherein B is a boron atom, R¹⁵ is a cyclic C₅₋₇ aromatic cation or a triphenyl methyl cation and each R¹⁸ is independently selected from the group consisting of phenyl radicals which are unsubstituted or substituted with from 3 to 5 substituents selected from the group consisting of a fluorine atom, a C₁₋₄ alkyl or alkoxy radical which is unsubstituted or substituted by a fluorine atom, and a silyl radical of the formula -Si-(R¹⁹)₃ wherein each R¹⁹ is independently selected from the group consisting of a hydrogen atom and a C₁₋₄ alkyl radical or a compound (activator) of the formula B(R¹⁸)₃ wherein R¹⁸ is as defined above, wherein the amount of activator used is such that the molar ratio of group 8, 9 or 10 metal to boron in [B(R¹⁸)₄]⁻ or B(R¹⁸)₃ is 1:1 to 1:3.

In the above compounds, preferably R¹⁸ is a pentafluorophenyl radical and R¹⁵ is a triphenylmethyl cation.

The molar ratio of group 8, 9 or 10 metal to boron in said activator can be from 1:1 to 1:3.

The activator capable of ionizing the Group 8, 9 or 10 metal complex abstract one or more L¹ ligands so as to ionize the Group 8, 9 or 10 metal center into a cation, but not to covalently bond with the Group 8, 9 or 10 metal; and to provide sufficient distance between the ionized Group 8, 9 or 10 metal and the ionizing activator to permit a polymerizable olefin to enter the resulting active site.

Examples of compounds capable of ionizing the Group 8, 9 or 10 metal complex include the following compounds:
triethylammonium tetra(phenyl)boron,
tripropylammonium tetra(phenyl)boron,
tri(n-butyl)ammonium tetra(phenyl)boron,
trimethylammonium tetra(p-tolyl)boron,
trimethylammonium tetra(o-tolyl)boron,
tributylammonium tetra(pentafluorophenyl)boron,
tributylammonium tetra(pentafluorophenyl)boron,
tri(n-butyl)ammonium tetra(o-tolyl)boron,
N,N-dimethylanilinium tetra(phenyl)boron,
N,N-diethylanilinium tetra(phenyl)boron,
N,N-diethylanilinium tetra(phenyl)n-butylboron,
N,N-2,4,6-pentamethylanilinium tetra(phenyl)boron,
di-(isopropyl)ammonium tetra(pentafluorophenyl)boron,
dicyclohexylammonium tetra(phenyl)boron,
triphenylphosphonium tetra(phenyl)boron,
tri(methylphenyl)phosphonium tetra(phenyl)boron,
tri(dimethylphenyl)phosphonium tetra(phenyl)boron,
tropillium tetrakispentafluorophenyl borate,
triphenylmethylium tetrakispentafluorophenyl borate,
benzene (diazonium) tetrakispentafluorophenyl borate,
tropillium phenyltrispentafluorophenyl borate,
triphenylmethylium phenyltrispentafluorophenyl borate,
benzene (diazonium) phenyltrispentafluorophenyl borate,
tropillium tetrakis (2,3,5,6-tetrafluorophenyl) borate,
triphenylmethylium tetrakis (2,3,5,6-tetrafluorophenyl) borate,
benzene (diazonium) tetrakis (3,4,5-trifluorophenyl) borate,
tropillium tetrakis (3,4,5-trifluorophenyl) borate,
benzene (diazonium) tetrakis (3,4,5-trifluorophenyl) borate,
tropillinum tetrakis (1,2,2-trifluoroethenyl) borate,
triphenylmethylium tetrakis (1,2,2-trifluoroethenyl) borate,
benzene (diazonium) tetrakis (1,2,2-trifluoroethenyl) borate,
tropillium tetrakis (2,3,4,5-tetrafluorophenyl) borate,
triphenylmethylium tetrakis (2,3,4,5-tetrafluorophenyl) borate, and
benzene (diazonium) tetrakis (2,3,4,5-tetrafluorophenyl) borate.

Readily commercially available activators which are capable of ionizing the Group 8, 9 or 10 metal complexes include:
N,N- dimethylaniliniumtetrakispentafluorophenyl borate, triphenylmethylium tetrakispentafluorophenyl borate, and trispentafluorophenyl boron.

If the Group 8, 9 or 10 metal complex is activated with a combination of an aluminum alkyl compound (generally other than aluminoxane), and a compound capable of ionizing the Group 8, 9 or 10 metal complex; the molar ratios of Group 8, 9 or 10 metal:metal in the alkylating agent (e.g. Al); metalloid (e.g. boron or phosphorus) in the activator capable of ionizing the Group 8, 9 or 10 metal complex (e.g. boron) may range from 1:1:1 to 1:100:5. Preferably, the alkylating activator is premixed/reacted with the Group 8, 9 or 10 metal complex and the resulting alkylated species is then reacted with the activator capable of ionizing the Group 8, 9 or 10 metal complex.

In a solution polymerization, the monomers are dissolved/dispersed in the solvent either prior to being fed to the reactor or for gaseous monomers, the monomer may be fed to the reactor so that it will dissolve in the reaction mixture. Prior to mixing, the solvent and monomers are generally purified to remove polar moieties. The polar moieties or catalyst poisons include water, oxygen, metal impurities, Preferably steps are taken before provision of such into the reaction vessel, for example by chemical treatment or careful separation techniques after or during the synthesis or preparation of the various components. The feedstock purification prior to introduction into the reaction solvent follows standard practices in the art (e.g. molecular sieves, alumina beds and oxygen removal catalysts) are used for the purification of ethylene, alpha-olefin and optional diene. The solvent itself as well (e.g. cyclohexane and toluene) is similarly treated. In some instances, out of an abundance of caution, excess scavenging activators may be used in the polymerization process.

The feedstock may be heated prior to feeding into the reactor. However, in many instances it is desired to remove heat from the reactor so the feedstock may be at ambient temperature to help cool the reactor.

Generally, the catalyst components may be premixed in the solvent for the reaction or fed as separate streams to the reactor. In some instances premixing is desirable to provide a reaction time for the catalyst components prior to entering the reaction. Such an "in line mixing" technique is described in a number of patents in the name of DuPont Canada Inc. For example it is described in U.S. patent 5,589,555 issued December 31, 1996.

The reactor may comprise a tube or serpentine reactor used in the "high pressure" polymerizations or it may comprise one or more reactors or autoclaves. It is well known that the use in series of two such reactors each of which may be operated so as to achieve different polymer molecular weight characteristics. The residence time in the reactor system will depend on the design and the capacity of the reactor. Generally, the reactors should be operated under conditions to achieve a thorough mixing of the reactants. On leaving the reactor system, the solvent is removed and the resulting polymer is finished in a conventional manner.

The present invention will now be illustrated by the following examples in which unless otherwise specified weight means weight % and parts means parts by weight (e.g. grams).

**Materials:** 2,6-dibromopyridine, diethylphosphine (Et₂PH), diphenylphosphine (Ph₂PH), di-tert-butylphosphine chloride (t-Bu₂PCl), iron (II) chloride (FeCl₂), iron (II) chloride tetrahydrates (FeCl₂.4(H₂O)), iron (II) tetrafluoroborate hexahydrate (Fe(BF₄)₂.4H₂O), iron (III) bromide (FeBr₃), iron (III) chloride (FeCl₃.6H₂O), cobalt chloride (CoCl₂), bis (benzonitrile) dichloropalladium (II) (PdCl₂(PhCN)₂), nickel (II) bromide (NiBr₂), n-Butyl lithium (BuLi, 1.6M in hexane), and trimethylsilyl azide (TMSN₃) were purchased from Aldrich Chemical Company, Inc. and Strem Chemical Inc. Solvents were prepared by passing through molecular sieves, de-oxo catalysts and alumina columns prior to use. Methylaluminoxane (PMAO-IP) (13.5 weight % of Al) was purchased from AKZO-NOBEL and used as supplied. 2,6-bis (diphenylphosphino)pyridine (Ic) was prepared using the method described in the literature (G. R. Newkome and D. C. Hager, J. Org. Chem., 43(5), 947, 1978). Diimine-Nickel complex (**VIII**) was synthesized as described in the literature (L.K. Johnson, C.M. Killiam, M. Brookhart, J. Am. Chem. Soc., 117, 6414, 1995). The anhydrous toluene was purchased from Aldrich and purified over molecular sieves prior to use. B(C₆F₅)₃ was purchased from Boulder Scientific Inc. and used without further purification.

**Measurements:** NMR spectra were recorded using a Bruker 200MHz spectrometer. ¹H NMR chemical shifts were reported with reference to tetramethylsilane. Polymer molecular weights and molecular weight distributions were measured by GPC (Waters 150-C) at 140°C in 1,2,4-trichlorobenzene calibrated using polyethylene standards. DSC was conducted on a DSC 220 C from Seiko Instruments. The heating rate is 10°C/minute from 0 to 200°C. FT-IR was conducted on a Nicolet Model 750 Magna IR spectrometer. Ml was measured on an automatic Ml machine with model number of MP993 at 190°C.

**Operation:** All synthesis and catalyst preparations were performed under nitrogen or argon using standard Schlenk techniques or in a dry-box.

### Example 1

### Synthesis of 2,6-(t-Bu₂P)₂pyridine (Ia)

To a THF (100 mL) solution of 2,6-dibromopyridine (2.37 g, 10 mmol) at -78°C was added slowly a THF (30 mL) solution of BuLi (6.25 mL, 1.6M in hexane, 10 mmol). The resulting yellow solution was allowed to warm to -25°C. A THF (30 mL) solution of t-Bu₂PCl (1.81 g, 10 mmol) was added to the reaction mixture slowly. The brown solution was allowed to warm to room temperature and was stirred for 1 hour. The reaction mixture was cooled to -78°C and a THF (30 mL) solution of BuLi (6.25 mL, 1.6 M in hexane, 10 mmol) was slowly added. The reaction mixture was warmed to -25°C and a THF (30 mL) solution of t-Bu₂PCl (1.81 g, 10 mmol) was added. The reaction mixture was warmed to room temperature and stirred for another 1 hour. All volatiles were then removed under vacuum. The resulting residue was dissolved in heptane (50 mL) and LiBr was removed by filtration. When the heptane was evaporated, a brown oily residue was obtained. The pure product was obtained by vacuum distillation of the residue (122°C / 0.5 mmHg). ¹H NMR (toluene-d₈, δ): 1.29 (d, J = 11.4Hz, 36H), 6.95 (m, 1H), 7.45 (m, 2H). The purity and molecular formula (M⁺=367 (30%)) were confirmed by GC-MS.

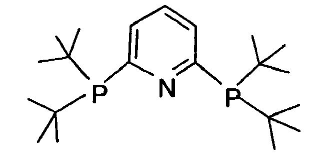

### Example 2

### Synthesis of 2,6-(Et₂P)₂pyridine (Ib)

A THF (100 mL) solution of diethyl phosphine (4.61 g, 51.2 mmol) was treated with n-BuLi (32 mL, 1.6 M, 51.2 mmol) using a drop-wise addition. The reaction mixture was allowed to stir 20 minutes and was then added to a solution of 2,6-dibromopyridine (6.04 g, 25.5 mmol) at 50°C resulting in a darkening of the solution to a brown/black color. The reaction was then further heated at 50°C for 5 hours. The product (1.52 g, yield: 50%) was purified by a short path distillation (76-78°C / 0.3 mmHg).

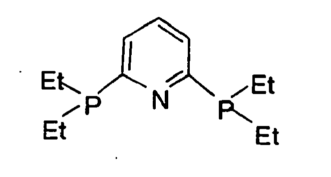

### Example 3

### Synthesis of 2,6-(t-Bu₂P=NTMS)₂pyridine (IIa)

A 200 mL Schlenk flask was fitted with a condenser, a nitrogen inlet, a gas outlet bubbler and a TMSN₃ (trimethyl silyl azide) addition line. The flask was charged with 2,6-(t-Bu₂P)₂pyridine (**Ia**) (1.84 g, 5 mmol). The TMSN₃ line was charged with TMSN₃ (7.3 mL, 5.5 mmol) through a syringe. At room temperature, 3 mL of TMSN₃ was injected into the flask and the mixture was heated to 95°C. The remaining TMSN₃ was added to the reaction at 95°C. As the addition occurred, nitrogen was evolved. After the addition was completed, the reaction mixture was kept for an additional 2 hours at 110°C. When the slight excess of TMSN₃ was removed under vacuum, a white solid (2.7 g, 100%) was obtained.
¹H NMR (toluene-d₈, δ): 0.42 (s, 18H), 1.21 (d, J = 14.3Hz, 36H), 7.23 (m, 1 H), 8.36 (m, 2H).

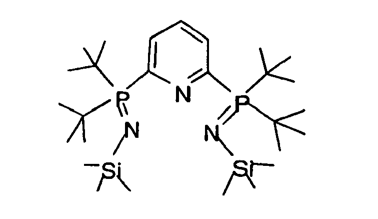

### Example 4

### Synthesis of 2,6-(Et₂P=NTMS)₂ayridine (IIb)

A 200 mL Schlenk flask was fitted with a condenser, a nitrogen inlet, a gas outlet bubbler and a TMSN₃ addition line. The flask was charged with 2,6-(Et₂P)₂pyridine (**Ib**) (1.28 g, 5 mmol). The TMSN₃ line was charged with TMSN₃ (7.3 mL, 5.5 mmol) through a syringe. At room temperature, 3 mL of TMSN₃ was injected into the flask and the mixture was heated to 95°C. The remaining TMSN₃ was added to the reaction at 95°C. As the addition occurred, nitrogen was evolved. After the addition was completed, the reaction mixture was kept for an additional 2 hours at 110°C. When the slight excess of TMSN₃ was removed under vacuum, an oil (2.15 g, 100%) was obtained. ¹H NMR (toluene-d₈, δ): 0.38 (s, 18H), 0.84 (t, J = 7.6Hz, 6H), 0.92 (t, J = 7.7Hz, 6H), 1.66 (m, 8H), 7.19 (m, 2H), 8.06 (m, 2H).

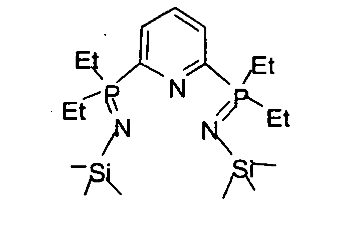

### Example 5

### Synthesis of 2,6-(Ph₂P=NTMS)₂pyridine (IIc)

A 200 mL Schlenk flask was fitted with a condenser, a nitrogen inlet, a gas outlet bubbler and a TMSN₃ addition line. The flask was charged with 2,6-(Ph₂P)₂pyridine (**Ic**) (2.24 g, 5 mmol). The TMSN₃ line was charged with TMSN₃ (7.3 mL, 5.5 mmol) through a syringe. At room temperature, 3 mL of TMSN₃ was injected into the flask and the mixture was heated to 95°C. The remaining TMSN₃ was added to the reaction at 95°C. As the addition occurred, nitrogen was evolved. After the addition was completed, the reaction mixture was kept for an additional 2 hours at 110°C. When the slight excess of TMSN₃ was removed under vacuum, a white solid (3.1 g, 100%) was obtained. ¹H NMR (toluene-d₈, δ): 0.30 (s, 18H), 7.03 (m, 4H), 6.97 (m, 8H), 7.16 (m, 1H), 7.55 (m, 8H), 8.32 (m, 2H).

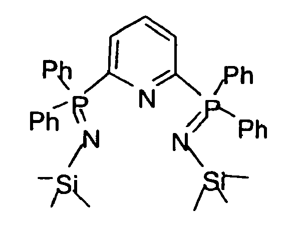

### Examples 6-11

### Synthesis of Catalyst Precursors

**General Procedure:** The ligand (2,6-(t-Bu₂P=NTMS)₂pyridine (**IIa**), 1 eq.) and a metal salt (FeCl₂, FeCl₂.4H₂O, CoCl₂, FeBr₃, FeCl₃.6H₂O or NiBr₂) were added together in a Schlenk flask in a dry-box. Then the flask was charged with THF (30 mL) or dichloromethane (CH₂Cl₂, 30 mL). The mixture was stirred for several hours until there were no detectable metal salts left in the flask. The reaction solution was filtered to remove some insoluble polymeric materials and was concentrated. Heptane (5 mL) was added to precipitate the complex. The resultant solid was filtered and washed with heptane and dried in vacuo.

### Example 6

### Fe(II) Complex (IIIa) from FeCl₂

Isolated as a beige yellow solid (Yield: 80%). ¹H NMR (THF-d8, all peaks appear as singlets due to their broadness, δ): 0.13 (s, br), 1.29 (s, br), 8.5 (s, br).

### Example 7

### Fe(II) Complex (IIIb) from FeCl₂.4H₂O

Isolated as a white solid (Yield: 90%). ¹H NMR (THF-d8, all peaks appear as singlets due to their broadness, δ): 0.01 (s, br), 1.21 (s, br), 8.5 (s, br), 10.2 (s, br).

### Example 8

### Co(II) Complex (IV) from CoCl₂

Isolated as a blue solid (Yield: 100%). ¹H NMR (THF-d8, all peaks appear as singlets due to their broadness, δ): -1.16 (s, br), 0.03 (s, br), 0.66 (s, br), 0.87 (s, br), 1.27 (s, br.), 7.13 (s, br.), 7.46 (s, br.).

### Example 9

### Fe(III) Complex (Va) from FeBr₃

Isolated as a brown solid (Yield: 95%). ¹H NMR (THF-d8, δ): 0.09 (s, 18H), 1.24 (d, 36H), 8.4 (s, br, 2H), 7.97 (s, br., 1 H).

### Example 10

### Fe(III) Complex (Vb) from FeCl₃.6H₂O

Isolated as a THF insoluble yellow solid (Yield: 100%).

### Example 11

### Ni(II) Complex (VI) from NiBr₂

Isolated as a greenish solid (Yield: 50%). ¹H NMR (THF-d8, δ): 0.09 (s,18H), 1.23 (d, 36H), 8.3 (s, br, 2H), 7.95 (s, br., 1H).

### Example 12

### Pd(II) Complex (VII) from IIc and Pd(PhCN)₂Cl₂

The ligand (2,6-(Ph₂P=NTMS)₂pyridine, **IIc**) (0.622 g, 1 mmol) and PdCl₂(PhCN)₂ (0.384 g, 1 mmol) were added together in a Schlenk flask in a dry-box. The flask was charged with dichloromethane (CH₂Cl₂, 30 mL). The mixture was stirred for 12 hours. The reaction solution was filtered to remove some insoluble polymeric materials and was concentrated. Heptane (5 mL) was added to precipitate the complex. The resultant solid was filtered, washed with heptane and dried in vacuo. The product was isolated as a yellow solid (Yield: 74%). ¹H NMR (toluene-d₈, δ): 0.17 (s, 18H), 7.20 (m, 12H), 7.4 (m, 1H), 7.85 (m, 8H), 8.45 (m, 2H).

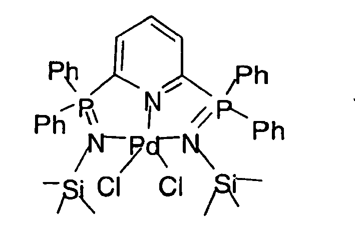

### Polymerizations

### Examples 13-15

### Low Pressure Slurry Process

Ethylene polymerization experiments were carried out at room temperature in a Schlenk flask (50 mL) equipped with magnetic stirring bar with constant supply of neat gaseous ethylene at atmospheric pressure. The catalysts were activated by PMAO-IP. In a typical experiment, the flask was charged with a toluene (25 mL) solution of **IIIa** (15 mg, 0.0224 mmol) and was purged with ethylene gas. Then a toluene (5 mL) solution of PMAO-IP (13.5 Al weight %, 4.49 g, 22.4 mmol in toluene) was injected via syringe. After 0.5 hours, the ethylene supply was closed and the reaction mixture with polyethylene solid was pour into an acidified ethanol
(5 vol % HCI). The product was filtered off and dried under vacuum for 6 hours.

**TABLE 1**

| **Polymerization of Ethylene at Low Pressure and Room Temperature** | | | |
|---|---|---|---|
| **Example No** | **Complex No.** | **Activity (gPE/mmol M. h)** | **Mol. Wt.* (polydispersity)** |
| 13 | IIIa | 10.7 | 609,700 (1.8) |
| 14 | IIIb | 9.43 | 782,100 (2.4) |
| 15 | Va | 4.51 | 396,400 (1.7) |

| | | | |
|---|---|---|---|
| *Oligomers were observed in the GPC measurements with molecular weight less than 1000. GC-MS analysis confirmed the presence of C18-C6 olefins. | | | |

### Example 16-27

### High Pressure Slurry and Solution Polymerizations

In the examples, the pressures given are gauge pressures. The following abbreviations and terms are used:
Branching: reported as the number of methyl groups per 1000 methylene groups in the polymer. It is determined by ¹³C{¹H}-NMR.
Polydispersity: weight average molecular weight (Mw) divided by number average molecular weight (Mn).
DSC: differential scanning calorimetry.
GPC: gel permeation chromatography.
MeOH: methanol.
PMAO-IP: a type of polymethylaluminoxane.

All the polymerization experiments described below were conducted using an Autoclave Engineers Zipperclave reactor (500 mL). All the chemicals (solvent, catalyst and cocatalyst) were fed into the reactor batchwise except ethylene which was fed on demand. No product was removed during the polymerization reaction. As are known to those skilled in the art, all the feed steams were purified prior to feeding into the reactor by contact with various absorption media to remove catalysts killing impurities such as water, oxygen, sulfur and polar materials. All components were stored and manipulated under an atmosphere of purified argon or nitrogen. The reactor uses a programmable logical control (PLC) system with Wonderware 5.1 software for the process control. Ethylene polymerizations were performed in the reactor equipped with an air driven stirrer and an automatic temperature control system.

The catalyst was dissolved in toluene. Polymerization temperature was 50°C for slurry polymerizations and 140°C for solution polymerizations. The polymerization reaction time varied from 9 to 60 minutes for each experiment. The reaction was terminated by adding 5 mL of methanol to the reactor and the polymer was recovered by evaporation of the solvent. The polymerization activities were calculated based on the weight of the polymer produced.

### Slurry Polymerizations

### Example 16

### The Iron Complex (IIIa) with MAO Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. The catalyst (**IIIa**) (64.6 umol, 43.2 mg) was dissolved in toluene (12.2 mL) and then injected into the reactor. After one minute, PMAO-IP (38.8 mmol, 8.6 mL) was injected into the reactor. The polymerization happened immediately and reaction temperature raised to 70°C. The reaction was terminated by adding 5 mL of MeOH after 30 minutes. The polymer was dried. Yield = 22.2 g. Activity = 687.4 gPE/mmolcat*hr. Mn = 943 x 10³. Tm = 132.9°C. I2, I5 and I21 were not measurable indicating the formation of a high molecular weight polymer.

### Example 17

### The Iron Complex (IIIa) with Borane Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. The catalyst (**IIIa**) (64.6 umol, 43.2 mg) was dissolved in toluene (11.8 mL) and transferred into a catalyst injection bomb, and then mixed with PMAO-IP (1.8 mmol, 0.4 mL). B(C₆F₅)₃ (68.4 umol, 35 mg) was dissolved in toluene (12.4 mL) and loaded into a cocatalyst injection bomb. The catalyst and cocatalyst were injected into the reactor simultaneously. The polymerization happened slowly at the beginning, then the polymerization temperature climbed to 97°C. The polymerization reaction was terminated by adding 5 mL of MeOH after 53 minutes. The polymer was dried. Yield = 10.1 g. Activity = 178.7 gPE/mmolcat*hr. Mn = 687x10³. Tm = 133.8°C. I2, I5 and I21 were not measurable indicating the formation of a high molecular weight polymer.

### Example 18

### The Iron Complex in-situ Formation then with MAO Activation

Toluene (216 mL) and FeCl₂ (64.6 umol, 8.2 mg) were transferred into the reactor with 0.5 mL of PMAO-IP (216.0 umol) in 10 mL of toluene as a scavenger. The solution was heated to 50°C and saturated with 2068.4 KPa (300 psig) of ethylene. The ligand (**IIa**) (67 umol, 36.2 mg) was dissolved in toluene (12.2 mL) and then injected into the reactor. The reaction mixture was stirred for 5 minutes, then PMAO-IP (38.8 mmol, 8.6 mL) was injected into the reactor. No reaction temperature increase was observed. The reaction was terminated by adding 5 mL of MeOH after 36 minutes. The polymer was dried. Yield = 3.3 g. Activity = 85.3 gPE/mmolcat*hr. Tm = 132.1°C. 12, 15 and 121 were not measurable indicating the formation of a high molecular weight polymer.

### Example 19

### The Iron Complex (IIIa) with MAO Activation for Ethylene and 1-Octene Copolymerization

Toluene (216 mL) and 1-octene (30 mL) were transferred into the reactor with 0.5 mL of PMAO-IP (216.0 umol) in 10 mL of toluene as a scavenger. The solution was heated to 50°C and saturated with 689.5 KPa of ethylene. The catalyst (**IIIa**) (64.8 umol, 43.3 mg) was dissolved in toluene (12.2 mL) and then injected into the reactor. After one minute, PMAO-IP (38.8 mmol, 8.6 mL) was injected into the reactor. The reaction temperature reached 63°C at the beginning. The polymerization reaction was terminated by adding 5 mL of MeOH after 9 minutes. The polymer was dried. Yield = 5.4 g. Activity = 555.8 gPE/mmolcat*hr. Mn = 158.7x10³. Tm = 105.9°C. 12.3 branches per 1000 carbon atoms was determined by ¹³C{¹H] NMR. I2, I5 and I21 were not measurable indicating the formation of a high molecular weight polymer.

### Example 20

### The Cobalt Complex (IV) with MAO Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. The catalyst (**IV**) (64.8 umol, 44.0 mg) was dissolved in toluene (12.2 mL) and then injected into the reactor. After one minute, PMAO-IP (38.8 mmol, 8.6 mL) was injected into the reactor. The polymerization happened immediately and reaction temperature raised to 63°C. The reaction was terminated by adding 5 mL of MeOH after 30 minutes. The polymer was dried. Yield = 6.2 g. Activity = 191.4 gPE/mmolcat*hr. Tm = 127.3°C. I2, I5 and I21 were not measurable indicating the formation of a high molecular weight polymer.

### Example 21

### The Fe(III) Complex (Va) with MAO Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. PMAO-IP (38.8 mmol, 8.6 mL) was injected into the reactor. After one minute, the catalyst (**Va**) (64.6 umol, 50.3 mg) was dissolved in toluene and injected to the reactor. The polymerization happened immediately and reaction temperature raised to 137°C. The reaction was terminated by adding 5 mL of MeOH after 9.5 minutes. The polymer was dried. Yield = 20.4 g. Activity = 1956.0 gPE/mmolcat*hr. Tm = 132.9°C. I2, I5 and I21 were not measurable indicating the formation of a high molecular weight polymer.

### Example 22

### The Nickel Complex (VI) with MAO Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. PMAO-IP (38.8 mmol, 8.6 mL) was injected into the reactor. After one minute, the catalyst (**VI**) (64.6 umol, 43.8 mg) was dissolved in toluene and injected to the reactor. The polymerization happened immediately and reaction temperature raised to 75°C. The reaction was terminated by adding 5 mL of MeOH after 10 minutes. The polymer was dried. Yield = 9.9 g. Activity = 913.9 gPE/mmolcat*hr. Tm = 129.3°C. I2, I5 and I21 were not measurable indicating the formation of a high molecular weight polymer.

### Example 23

### The Palladium Complex (VII) with MAO Activation

Toluene (216 mL) was transferred into the reactor with 0.5 mL of PMAO-IP (216.0 umol) in 10 mL of toluene as a scavenger. The solution was heated to 50°C and saturated with 2068.4 KPa (300 psig) of ethylene. PMAO-IP (38.8 mmol, 8.6 mL) was injected into the reactor. After one minute, the catalyst (**VII**) (69.3 umol, 51.9 mg) was dissolved in toluene (12.2 mL) and then injected into the reactor. Polymerization happened immediately and reaction temperature raised to 55°C. The reaction was terminated by adding 5 mL of MeOH after 20 minutes. The polymer was dried. Yield = 6.3 g. Activity = 272.8 gPE/mmolcat*hr. Tm = 135.4°C. I21 = 2.21; I2 and I5 were not measurable.

### Solution Polymerizations

### Example 24

### The Iron Complex (IIIa) with MAO Activation

Toluene (216 mL) was transferred into the reactor with 0.5 mL of PMAO-IP (216.0 umol) in 10 mL of toluene as a scavenger. The solution was heated to 140°C and saturated with 1655 KPa (240 psig) of ethylene. PMAO-IP (38.8 mmol, 8.6 mL) was injected into the reactor. After one minute, the catalyst (**IIIa**) (64.6 umol, 43.2 mg) was dissolved in toluene and injected to the reactor. The polymerization happened immediately, reaction temperature raised to 150°C and the catalyst deactivated within minutes. The reaction was terminated by adding 5 mL of MeOH after 13 minutes. The polymer was dried. Yield = 7.9 g. Activity = 564.8 gPE/mmolcat*hr. Tm = 133.4°C. I2, I5 and I21 were not measurable indicating the formation of a high molecular weight polymer.

### Example 25

### The Fe(II) Complex (IIIb) with MAO Activation

Toluene (216 mL) was transferred into the reactor with 0.5 mL of PMAO-IP (216.0 umol) in 10 mL of toluene as a scavenger. The solution was heated to 140°C and saturated with 1972 KPa (286 psig) of ethylene. PMAO-IP (38.8 mmol, 8.6 mL) was injected into the reactor. After one minute, the catalyst (**IIIb**) (64.6 umol, 44.5 mg) was dissolved in toluene and injected to the reactor. The polymerization happened immediately, reaction temperature raised to 150°C and the catalyst deactivated within 1 minute. The reaction was terminated by adding 5 mL of MeOH after 10 minutes. The polymer was dried. Yield = 6.1 g. Activity = 564.3 gPE/mmolcat*hr. Tm = 141.0°C. 12, 15 and 121 were not measurable indicating the formation of a high molecular weight polymer.

### Example 26

### The Fe(III) Complex (Va) with MAO Activation for Ethylene and 1-Octene Copolymerization

Toluene (216 mL) and 40 mL of 1-octene were transferred into the reactor with 0.5 mL of PMAO-IP (216.0 umol) in 10 mL of toluene as a scavenger. The solution was heated to 140°C and saturated with 2068.4 KPa (300 psig) of ethylene. PMAO-IP (38.8 mmol, 8.6 mL) was injected into the reactor. After one minute, the catalyst (**Va**) (64.6 umol, 50.3 mg) was dissolved in toluene and injected to the reactor. The polymerization happened immediately with no temperature raise. The reaction was terminated by adding 5 mL of MeOH after 10 minutes. The polymer was dried. Yield = 4.5 g. Activity = 409.7 gPE/mmolcat*hr. Tm = 130.2°C. 8.2 branches per 1000 carbon atoms was determined by ¹³C{¹H] NMR. I2 and I5 were not measurable and I21 = 0.3649.

### Comparative Examples

### Example 27

### The Nickel Diimine Complex (VIII) with MAO Activation

Cyclohexane (216 mL) was transferred into the reactor. The solvent was heated to 160°C and saturated with 2110 KPa (306 psig) of ethylene. PMAO-IP (13.0 mmol, 3.25 mL) was injected into the reactor. After one minute, the catalyst (**VIII**) (43.6 umol, 27.1 mg) was dissolved in toluene and injected to the reactor. The polymerization happened immediately with no temperature raise. The reaction was terminated by adding 5 mL of MeOH after 10 minutes. The polymer was dried. Yield = 2.5 g. Activity = 347.2 gPE/mmolcat*hr. Mn = 2.2 x 10³. Mw = 26 x 10³.

## Claims

1. A ligand of formula I: 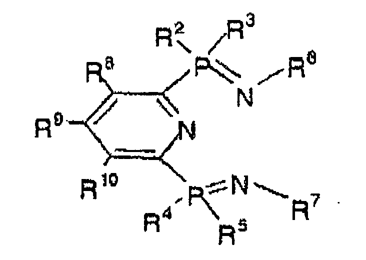 wherein R², R³, R⁴ and R⁵ are independently selected from the group consisting of a C₁₋₁₀ alkyl radical and phenyl radical; R⁶ and R⁷ are independently selected from the group consisting of tri C₁₋₁₆ is alkyl silyl radicals and of phenyl radicals which are unsubstituted or substituted by up to five substituents independtly selected from the group consisting of a C₁₋₁₀ hydrocarbyl radical, wherein two of said hydrocarbyl radicals taken together may form a ring ; and R⁸, R⁹ and R¹⁰ are independently selected from the group consisting of a hydrogen atom and a C₁₋₄ alkyl radical.

2. The ligand according to claim 1, wherein R², R³, R⁴ and R⁵ are independently selected from the group consisting of a t-butyl radical or a phenyl radical.

3. The ligand according to claim 2, wherein R⁶ and R⁷ are independently selected from the group consisting of a trimethyl silyl radical and a 2,6 diisopropyl phenyl radical.

4. The ligand according to claim 3, wherein R⁸, R⁹ and R¹⁰ are a hydrogen atom.

5. The ligand according to claim 4, wherein R⁸, R⁹ and R¹⁰ are independently selected from the group consisting of C₁₋₄ alkyl radicals.

6. The ligand according to claim 5, wherein R⁸, R⁹ and R¹⁰ are the same

7. A process for the polymerization of one or more C₂₋₁₂ alpha olefins in the presence of:
(a) a complex comprising a Group 8, 9 or 10 metal and ligand of formula I: 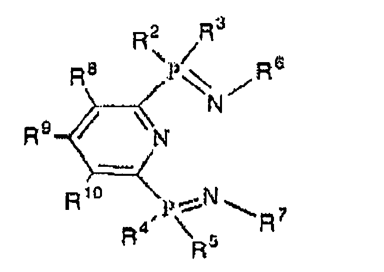 wherein R², R³, R⁴ and R⁵ are independently selected from the group consisting of a C₁₋₁₀ alkyl radical and a phenyl radical; R⁶ and R⁷ are independently selected from the group consisting of tri C₁₋₁₈ alkyl silyl radicals and of phenyl radicals which are unsubstituted or substituted by up to five substituents independtly selected from the group consisting of a C₁₋₁₀ hydrocarbyl radical, wherein two of said hydrocarbyl radicals taken together may form a ring ; and R⁸,R⁹ and R¹⁰ are independently selected from the group consisting of a hydrogen atom and a C₁₋₄ alkyl radical; and
(b) an activator selected from the group consisting of:
(i) aluminoxane compounds R²⁰₂AlO(R²⁰AlO)ₘAlR²⁰₂ wherein
each R²⁰ is independently selected from the group consisting of C₁₋₂₀ hydrocarbyl radical and m is from 5 to 30 and where the amount of activator used is such that the molar ratio of aluminum to Group 8,9 or 10 metal is from 20:1 to 1000:1;
(ii) anions of the formula [B(R¹⁸)₄]⁻ wherein each R¹⁸ is independently selected from the group consisting of phenyl radicals which are unsubstituted or substituted by up to 5 substituents selected from the group consisting of a fluorine atom, a C₁₋₄ alkyl or alkoxy radical which Is unsubstituted or substituted by a fluorine atom and a silyl radical of the formula -Si(R¹⁰)₃; wherein each R¹⁰ Is independently selected from the group consisting of a hydrogen atom and a C₁₋₄ alkyl radical; and an activator of the formula [B(R¹⁸)3] wherein R¹⁸ is as defined above and wherein the amount of activator used is such that the molar ratio of Group 8, 9 or 10 metal to boron in [B(R¹⁸)₄]⁻ or [B(R¹⁸)₃] is from 1:1 to 1:3; and
(iii) a mixture of activators (i) and (ii) and an aluminum compound selected from the group consisting of aluminum alkyls of the formula AlR₃₋ₙXₙ in which R is independently selected from the group consisting of a C₁₋₈ alkyl radical, X is a halogen atom and n is 0, 1, 2 or 3 and wherein the amount of activator used is such that the ratio of Group 8, 9 or 10 metal to aluminum to boron in [B(R¹⁸)₄]⁻ or [B(R¹⁸)₃] is from 1:1:1 to 1:100:5;
at a temperature from 20 to 250°C and at a pressure from 103.4 to 103,400 KPa (15 to 15000 psi).

8. The process according to claim 7, wherein said one or more olefins are selected from the group consisting of ethylene, propylene, butene, hexene and octene.

9. The process according to claim 8, wherein M is selected from the group consisting of Fe, Co, Ni and Pd.

10. The process according to claim 9, wherein R²⁰ is a methyl radical.

11. The process according to claim 10, wherein R², R³, R⁴ and R⁶ are independently selected from the group consisting of a t-butyl radical or a phenyl radical.

12. The process according to claim 11, wherein R⁶ and R⁷ are independently selected from the group consisting of a trimethyl silyl radical and a 2,6-diisopropyl phenyl radical.

13. The process according to claim 12, wherein R⁸, R⁹ and R¹⁰ are a hydrogen atom.

14. The process according to claim 13, wherein R⁸, R⁹ and R¹⁰ are independently selected from the group consisting of C₁₋₄ alkyl radicals.

15. The process according to claim 14, wherein R⁸, R⁹ and R¹⁰ are the same.

16. The process according to claim 15, wherein the temperature is from 120 to 250°C, the pressure is from 689.5 to 31,026 KPa (100 to 4,500 psig), the activator is an aluminoxane in which each R²⁰ is selected from the group consisting of C₁₋₄ alkyl radicals and m is from 5 to 30.

17. The process according to claim 15, wherein the temperature is from 20 to 120°C, the pressure is from 103.4 to 31,026 KPa (15 to 4,500 psig), the activator is an aluminoxane in which each R²⁰ is selected from the group consisting of C₁₋₄ alkyl radicals and m is from 5 to 30.

18. The process according to claim 15, wherein the temperature is from 120 to 250°C, the pressure is from 689.5 to 31,026 KPa (100 to 4,500 psig) and the activator is selected from the group consisting of N,N- dimethylaniliniumtetrakispentafluorophenyl borate, triphenyimethylium tetrakispentafluorophenyl borate and trispentafluorophenyl boron.

19. The process according to claim 15, wherein the temperature is from 20 to 120°C, the pressure is from 103.4 to 31,026 KPa (15 to 4,500 psig) and the activator is selected from the group consisting of N,N- dimethylaniliniumtetrakispentafluorophenyl borate, triphenylmethylium tetraklspentafluorophenyl borate and trispentafluorophenyl boron.

20. The process according to claim 15, wherein the temperature is from 120 to 250°C, the pressure is from 103.4 to 31,026 KPa (15 to 4,500 psig) and the activator is a combination of an activator selected from the group consisting of N,N-dimethylaniliniumtetrakispentafluorophenyl borate, triphenylmethylium tetrakispentafluorophenyl borate and trispentafluorophenyl boron and an aluminum alkyl compound.

21. The process according to claim 15, wherein the temperature is from 20 to 120°C, the pressure is from 103.4 to 31,026 KPa (15 to 4,500 psig) and the activator is a combination of an ionic activator selected from the group consisting of N,N-dimethylaniliniumtetrakispentafluorophenyl borate, triphenylmethylium tetrakispentafluorophenyl borate and trispentafluorophenyl boron and an aluminum alkyl compound.

22. A process for reacting one or more C₂₋₁₂ alpha olefins in the presence of a catalyst of formula III: 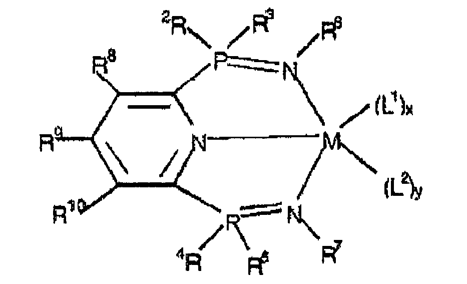 wherein R², R³ , R⁴ and R⁶ are Independently selected from the group consisting of a C₁₋₁₀ alkyl radical and a phenyl radical; R⁶ and R⁷ are independently selected from the
group consisting of tri C₁₋₁₆ alkyl silyl radicals and of phenyl radicals which are unsubstituted or substituted by up to five substituents independtly selected from the group consisting of a C₁₋₁₀ hydrocarbyl radical, wherein two of said hydrocarbyl radicals taken together may form a ring ; and R⁸, R⁹ and R¹⁰ are independently selected from the group consisting of a hydrogen atom and a C₁₋₄ alkyl radical; M is a Group 8,9, or 10 metal; L¹ is a neutral monodentate ligand which is only loosely bound to the metal by a coordinative bond; L² is selected from the group consisting of hydrogen, halogen, C₁₋₁₀ hydrocarbyl radical and C₁₋₁₀ alkoxy radical, each of which said hydrocarbyl and alkoxy radicals may be unsubstituted by or further substituted by halogen, C₁₋₆ alkyl radical, C₁₋₆ alkoxy radical, C₆₋₁₀ aryl or aryl oxy radical, amido radical unsubstituted or substituted by up to two C₁₋₆ alkyl radicals, or phosphido radical unsubstituted or substituted by up to two C₁₋₆ alkyl radicals; x is from 0 to 12; and y is equal to the oxidation state of the metal; with an activator selected from the group consisting of:
(i) aluminoxane compounds R²⁰₂AlO(R²⁰AlO)ₘAlR²⁰₂ wherein each R²⁰ is independently selected form the group consisting of C₁₋₂₀ hydrocarbyl radical and m is from 5 to 30 and wherein the amount of activator used is such that the molar ratio of aluminum to Group 8, 9 or 10 metal is from 20:1 to 1000:1;
(ii) anions of the formula [B(R¹⁸)₄]⁻ wherein each R¹⁸ is independently selected from the group consisting of phenyl radicals which are unsubstituted or substituted by up to 5 substituents selected from the group consisting of a fluorine atom, a C₁₋₄ alkyl or alkoxy radical which is unsubstituted or substituted by a fluorine atom and a silyl radical of the formula -Si(R¹⁹)₃ wherein each R¹⁹ is Independently selected from the group consisting of a hydrogen atom and a C₁₋₄ alkyl radical; and an activator of the formula [B(R¹⁸)₃] wherein R¹⁸ is as defined above and wherein the molar amount of activator used is such that the molar ratio of Group 8, 9 or 10 metal to boron in [B(R¹⁸)₄]⁻ or [B(R¹⁸)₃] is from 1:1 to 1:3;
and
(iii) a mixture of activators (i) and (ii) and an aluminium compound selected from the group consisting of aluminum alkyls of the formula AlR₃₋ₙXₙ in which R is independently selected from the group consisting of a C₁₋₆ alkyl radical and a C₁₋₈ alkoxy radical, X is a halogen atom and n is 0, 1,2 or 3 and wherein the amount of activator used is such that the ratio of Group 8, 9 or 10 metal to aluminum to boron In [B(R¹⁸)₄]⁻ or [B(R¹⁸)₃] is from 1:1:1 to 1:100:5.
at a temperature from 20 to 250°C and at a pressure from 103.4 to 103,400 KPa (15 to 15000 psi).

23. The process according to claim 22, wherein L¹ is selected from the group consisting of a water and tetrahydrofuran.

24. The process according to claim 23, wherein L² is selected from the group consisting of C₁₋₄ alkyl radical, C₁₋₄ alkoxy radical and a halogen atom.

25. The process according to claim 24, wherein said one or more olefins are selected from the group consisting of ethylene, propylene, butene, hexene and octene.

26. The process according to claim 25, wherein in R², R³, R⁴ and R⁵ are phenyl radicals.

27. The process according to claim 26, wherein in the precursor R⁶ and R⁷ are 2,6-diisopropyl phenyl radicals.

28. The process according to claim 27, wherein M is selected from the group consisting of Fe, Co, Ni and Pd.

29. The process according to claim 28, wherein the temperature is from 120 to 250°C and the pressure is from 689.5 to 31,026 KPa (100 to 4,500 psig).

30. The process according to claim 29, wherein the activator is an aluminoxane in which each R²⁰ Is selected from the group consisting of C₁₋₄ alkyl radicals and m is from 5 to 30.

31. The process according to claim 30, wherein R²⁰ is a methyl radical.

32. The process according to claim 30, wherein the activator is selected from the group consisting of N,N-dimethylanilinlumtetraklspentafluorophenyl borate, triphenylmethylium tetrakispentafluorophenyl borate and trispentafluorophenyl boron.

33. The process according to claim 30, wherein the activator is a combination of an activator selected from the group consisting of N,N- dimethylaniliniumtetrakispentafluorophenyl borate, triphenylmethylium tetrakispentafluorophenyl borate and trispentafluorophenyl boron and an aluminum alkyl.

34. The process according to claim 28, wherein the temperature is from 20 to 120°C and the pressure is from 103.4 to 31,026 KPa (15 to 4,500 psig).

35. The process according to claim 34, wherein the activator is an aluminoxane in which each R²⁰ is selected from the group consisting of C₁₋₄ alkyl radicals and m is from 5 to 30.

36. The process according to claim 35, wherein R²⁰ is a methyl radical.

37. The process according to claim 36, wherein the activator is selected from the group consisting of N,N-dimethylaniliniumtetrakispentafluorophenyl borate, triphenylmethylium tetrakispentafluorophenyl borate and trispentafluorophenyl boron.

38. The process according to claim 36, wherein the activator is a combination of an activator selected from the group consisting of N,N-dimethylaniliniumtetrakispentafluorophenyl borate, triphenylmethylium tetraklspentafluorophenyl borate and trispentafluorophenyl boron and an aluminum alkyl.

## Patentansprüche

1. Ligand der Formel I: 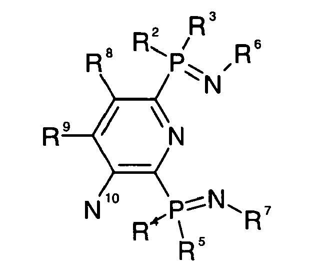 worin R², R³, R⁴ und R⁵ unabhängig voneinander aus der aus C₁₋₁₀-Alkylresten und einem Phenylrest bestehenden Gruppe ausgewählt sind; R⁶ und R⁷ unabhängig voneinander aus der aus a) Tri-C₁₋₁₆-alkylsilylresten und b) Phenylresten, die unsubstituiert oder mit bis zu fünf unabhängig voneinander aus der aus C₁₋₁₀-Hydrocarbylresten bestehenden Gruppe ausgewählten Substituenten substituiert sind, worin zwei der Hydrocarbylreste gegebenenfalls zusammen einen Ring bilden, bestehenden Gruppe ausgewählt sind; und R⁸, R⁹ und R¹⁰ unabhängig voneinander aus der aus dem Wasserstoffatom und C₁₋₄-Alkylresten bestehenden Gruppe ausgewählt sind.

2. Ligand nach Anspruch 1, worin R², R³, R⁴ und R⁵ unabhängig voneinander aus der aus einem t-Butylrest und einem Phenylrest bestehenden Gruppe ausgewählt sind.

3. Ligand nach Anspruch 2, worin R⁶ und R⁷ unabhängig voneinander aus der aus einem Trimethylsilylrest und einem 2,6-Diisopropylphenylrest bestehenden Gruppe ausgewählt sind.

4. Ligand nach Anspruch 3, worin R⁸, R⁹ und R¹⁰ jeweils Wasserstoff sind.

5. Ligand nach Anspruch 4, worin R⁸, R⁹ und R¹⁰ unabhängig voneinander aus der aus C₁₋₄-Alkylresten bestehenden Gruppe ausgewählt sind.

6. Ligand nach Anspruch 5, worin R⁸, R⁹ und R¹⁰ gleich sind.

7. Verfahren zur Polymerisation eines oder mehrerer C₂₋₁₂-α-Olefine in Gegenwart:
(a) eines Komplexes, der ein Metall der Gruppe 8, 9 oder 10 und einen Liganden der Formel I umfasst: 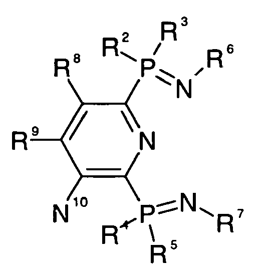 worin R², R³, R⁴ und R⁵ unabhängig voneinander aus der aus C₁₋₁₀-Alkylresten und einem Phenylrest bestehenden Gruppe ausgewählt sind; R⁶ und R⁷ unabhängig voneinander aus der aus a) Tri-C₁₋₁₆-alkylsilylresten und b) Phenylresten, die unsubstituiert oder mit bis zu fünf unabhängig voneinander aus der aus C₁₋₁₀-Hydrocarbylresten bestehenden Gruppe ausgewählten Substituenten substituiert sind, worin zwei der Hydrocarbylreste gegebenenfalls zusammen einen Ring bilden, bestehenden Gruppe ausgewählt sind; und R⁸, R⁹ und R¹⁰ unabhängig voneinander aus der aus dem Wasserstoffatom und C₁₋₄-Alkylresten bestehenden Gruppe ausgewählt sind; und
(b) eines Aktivators, der aus der aus Folgendem bestehenden Gruppe ausgewählt ist:
(i) Aluminoxanverbindungen R²⁰₂(AlO(R²⁰AlO)ₘAlR²⁰₂, worin die R²⁰ jeweils unabhängig voneinander aus der aus C₁₋₂₀-Hydrocarbylresten bestehenden Gruppe ausgewählt sind und m = 5 bis 30 ist und worin die eingesetzte Aktivatormenge so gewählt wird, dass das Molverhältnis zwischen Aluminium und Metall der Gruppe 8, 9 oder 10 20:1 bis 1000:1 beträgt;
(ii) Anionen der Formel [B(R¹⁸)₄]⁻, worin die R¹⁸ unabhängig voneinander aus der aus Phenylresten bestehenden Gruppe ausgewählt sind, die unsubstituiert oder mit bis zu 5 Substituenten substituiert sind, die aus der aus einem Fluoratom, einem C₁₋₄-Alkyl- oder -Alkoxyrest, der unsubstituiert oder mit einem Fluoratom substituiert ist, und einem Silylrest der Formel -Si(R¹⁹)₃ bestehenden Gruppe ausgewählt sind; worin die R¹⁹ jeweils unabhängig voneinander aus der aus dem Wasserstoffatom und C₁₋₄-Alkylresten bestehenden Gruppe ausgewählt sind; und einem Aktivator der Formel [B(R¹⁸)₃], worin R¹⁸ wie oben definiert ist und worin die eingesetzte Aktivatormenge so gewählt wird, dass das Molverhältnis zwischen Metall der Gruppe 8, 9 oder 10 und Bor in [B(R¹⁸)₄]⁻ oder [B(R¹⁸)₃] 1:1 bis 1:3 beträgt; und
(iii) einem Gemisch aus Aktivatoren (i) und (ii) und einer Aluminiumverbindung, die aus der aus Aluminiumalkylen der Formel AlR₃₋ₙXₙ, worin die R unabhängig voneinander aus der aus C₁₋₈-Alkylresten bestehenden Gruppe ausgewählt sind, X ein Halogenatom ist und n = 0, 1, 2 oder 3 ist, bestehenden Gruppe ausgewählt ist und worin die eingesetzte Aktivatormenge so gewählt wird, dass das Verhältnis zwischen Metall der Gruppe 8, 9 oder 10, Aluminium und Bor in [B(R¹⁸)₄]⁻ oder [B(R¹⁸)₃] 1:1:1 bis 1:100:5 beträgt;
bei einer Temperatur von 20 bis 250 °C und einem D ruck von 103,4 bis 103.400 kPa (15 bis 15.000 psi).

8. Verfahren nach Anspruch 7, worin das eine oder die mehreren Olefine aus der aus Ethylen, Propylen, Buten, Hexen und Octen bestehenden Gruppe ausgewählt ist bzw. sind.

9. Verfahren nach Anspruch 8, worin M aus der aus Fe, Co, Ni und Pd bestehenden Gruppe ausgewählt ist.

10. Verfahren nach Anspruch 9, worin R²⁰ ein Methylrest ist.

11. Verfahren nach Anspruch 10, worin R², R³, R⁴ und R⁵ unabhängig voneinander aus der aus einem t-Butylrest und einem Phenylrest bestehenden Gruppe ausgewählt sind.

12. Verfahren nach Anspruch 11, worin R⁶ und R⁷ unabhängig voneinander aus der aus einem Trimethylsilylrest und einem 2,6-Diisopropylphenylrest bestehenden Gruppe ausgewählt sind.

13. Verfahren nach Anspruch 12, worin R⁸, R⁹ und R¹⁰ jeweils ein Wasserstoffatom sind.

14. Verfahren nach Anspruch 13, worin R⁸, R⁹ und R¹⁰ unabhängig voneinander aus der aus C₁₋₄-Alkylresten bestehenden Gruppe ausgewählt sind.

15. Verfahren nach Anspruch 14, worin R⁸, R⁹ und R¹⁰ gleich sind.

16. Verfahren nach Anspruch 15, worin die Temperatur 120 bis 250 °C beträgt, der Druck 689,5 bis 81.026 kPa (100 bis 4.500 psi) beträgt und der Aktivator ein Aluminoxan ist, worin die R²⁰ jeweils aus der aus C₁₋₄-Alkylresten bestehenden Gruppe ausgewählt sind und m = 5 bis 30 ist.

17. Verfahren nach Anspruch 15, worin die Temperatur 20 bis 120 °C beträgt, der Druck 103,4 bis 31.026 kPa (15 bis 4.500 psi) beträgt und der Aktivator ein Aluminoxan ist, worin die R²⁰ jeweils aus der aus C₁₋₄-Alkylresten bestehenden Gruppe ausgewählt sind und m = 5 bis 30 ist.

18. Verfahren nach Anspruch 15, worin die Temperatur 120 bis 250 °C beträgt, der Druck 689,5 bis 31.026 kPa (100 bis 4.500 psi) beträgt und der Aktivator aus der aus N,N-Dimethylaniliniumtetrakispentafluorphenylborat, Triphenylmethyliumtetrakispentafluorphenylborat und Trispentafluorphenylbor bestehenden Gruppe ausgewählt ist.

19. Verfahren nach Anspruch 15, worin die Temperatur 20 bis 120 °C beträgt, der Druck 103,4 bis 31.026 kPa (15 bis 4.500 psi) beträgt und der Aktivator aus der N,N-Dimethylaniliniumtetrakispentafluorphenylborat, Triphenylmethyliumtetrakispentafluorphenylborat und Trispentafluorphenylbor bestehenden Gruppe ausgewählt ist.

20. Verfahren nach Anspruch 15, worin die Temperatur 120 bis 250 °C beträgt, der Druck 103,4 bis 31.026 kPa (15 bis 4.500 psi) beträgt und der Aktivator eine Kombination aus einem Aktivator, der aus der aus N,N-Dimethylaniliniumtetrakispentafluorphenylborat, Triphenylmethyliumtetrakispentafluorphenylborat und Trispentafluorphenylbor bestehenden Gruppe ausgewählt ist, und einer Aluminiumalkylverbindung ist.

21. Verfahren nach Anspruch 15, worin die Temperatur 20 bis 120 °C beträgt, der Druck 103,4 bis 31.026 kPa (15 bis 4.500 psi) beträgt und der Aktivator eine Kombination aus einem ionischen Aktivator, der aus der aus N,N-Dimethylaniliniumtetrakispentafluorphenylborat, Triphenylmethyliumtetrakispentafluorphenylborat und Trispentafluorphenylbor bestehenden Gruppe ausgewählt ist, und einer Aluminiumalkylverbindung ist.

22. Verfahren zur Umsetzung eines oder mehrerer C₂₋₁₂-α-Olefine in Gegenwart eines Katalysators der Formel III: 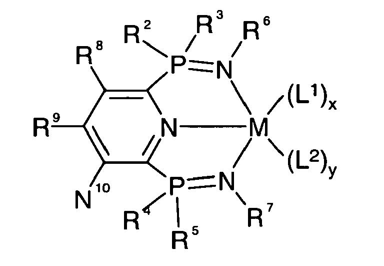 worin R², R³, R⁴ und R⁵ unabhängig voneinander aus der aus C₁₋₁₀-Alkylresten und einem Phenylrest bestehenden Gruppe ausgewählt sind; R⁶ und R⁷ unabhängig voneinander aus der aus a) Tri-C₁₋₁₆-alkylsilylresten und b) Phenylresten, die unsubstituiert oder mit bis zu fünf unabhängig voneinander aus der aus C₁₋₁₀-Hydrocarbylresten bestehenden Gruppe ausgewählten Substituenten substituiert sind, worin zwei der Hydrocarbylreste gegebenenfalls zusammen einen Ring bilden, bestehenden Gruppe ausgewählt sind; und R⁸, R⁹ und R¹⁰ unabhängig voneinander aus der aus dem Wasserstoffatom und C₁₋₄-Alkylresten bestehenden Gruppe ausgewählt sind; M ein Metall der Gruppe 8, 9 oder 10 ist; L¹ ein neutraler einzähniger Ligand ist, der nur schwach über einer koordinativen Bindung an das Metall gebunden ist; L² aus der aus Wasserstoff, Halogen, C₁₋₁₀-Hydrocarbylresten und C₁₋₁₀-Alkoxyresten bestehenden Gruppe ausgewählt ist, wobei jeder der Hydrocarbyl- und Alkoxyreste unsubstituiert oder mit Halogen, einem C₁₋₈-Alkylrest, einem C₁₋₈-Alkoxyrest, C₆₋₁₀-Aryl- oder
- Aryloxyrest, unsubstituierten oder mit bis zu zwei C₁₋₈-Alkylresten substituierten Amidorest oder unsubstituierten oder mit bis zu zwei C₁₋₈-Alkylresten substituierten Phosphidorest weiter substituiert sein kann; x = 0 bis 12 ist; und y der Oxidationsstufe des Metalls entspricht;
mit einem Aktivator, der aus folgender Gruppe ausgewählt ist:
(i) Aluminoxanverbindungen R²⁰₂(AlO(R²⁰AlO)ₘAlR²⁰₂, worin die R²⁰ jeweils unabhängig voneinander aus der aus C₁₋₂₀-Hydrocarbylresten bestehenden Gruppe ausgewählt sind und m = 5 bis 30 ist und worin die eingesetzte Aktivatormenge so gewählt wird, dass das Molverhältnis zwischen Aluminium und Metall der Gruppe 8, 9 oder 10 20:1 bis 1000:1 1 beträgt;
(ii) Anionen der Formel [B(R¹⁸)₄]⁻, worin die R¹⁸ unabhängig voneinander aus der aus Phenylresten bestehenden Gruppe ausgewählt sind, die unsubstituiert oder mit bis zu 5 Substituenten substituiert sind, die aus der aus einem Fluoratom, einem C₁₋₄-Alkyl- oder -Alkoxyrest, der unsubstituiert oder mit einem Fluoratom substituiert ist, und einem Silylrest der Formel -Si(R¹⁹)₃ bestehenden Gruppe ausgewählt sind;
worin die R¹⁹ jeweils unabhängig voneinander aus der aus dem Wasserstoffatom und C₁₋₄-Alkylresten bestehenden Gruppe ausgewählt sind; und einem Aktivator der Formel [B(R¹⁸)₃], worin R¹⁸ wie oben definiert ist und worin die eingesetzte Aktivatormenge so gewählt wird, dass das Molverhältnis zwischen Metall der Gruppe 8, 9 oder 10 und Bor in [B(R¹⁸)₄]⁻ oder [B(R¹⁸)₃] 1:1 bis 1:3 beträgt; und
(iii) einem Gemisch aus Aktivatoren (i) und (ii) und einer Aluminiumverbindung, die aus der aus Aluminiumalkylen der Formel AlR₃₋ₙXₙ, worin die R jeweils unabhängig voneinander aus der aus C₁₋₈-Alkylresten bestehenden Gruppe ausgewählt ist, X ein Halogenatom ist und n = 0, 1, 2 oder 3 ist, bestehenden Gruppe ausgewählt ist und worin die eingesetzte Aktivatormenge so gewählt wird, dass das Verhältnis zwischen Metall der Gruppe 8, 9 oder 10, Aluminium und Bor in [B(R¹⁸)₄]⁻ oder [B(R¹⁸)₃] 1:1:1 bis 1:100:5 beträgt;
bei einer Temperatur von 20 bis 250 °C und einem D ruck von 103,4 bis 103.400 kPa (15 bis 15.000 psi).

23. Verfahren nach Anspruch 22, worin L¹ aus der aus Wasser und Tetrahydrofuran bestehenden Gruppe ausgewählt ist.

24. Verfahren nach Anspruch 23, worin L² aus der aus C₁₋₄-Alkylresten, C₁₋₄-Alkoxy-resten und einem Halogenatom bestehenden Gruppe ausgewählt ist.

25. Verfahren nach Anspruch 24, worin das eine oder die mehreren Olefine aus der aus Ethylen, Propylen, Buten, Hexen und Octen bestehenden Gruppe ausgewählt ist bzw. sind.

26. Verfahren nach Anspruch 25, worin R², R³, R⁴ und R⁵ Phenylreste sind.

27. Verfahren nach Anspruch 26, worin R⁶ und R⁷ im Vorläufer 2,6-Diisopropylphenylreste sind.

28. Verfahren nach Anspruch 27, worin M aus der aus Fe, Co, Ni und Pd bestehenden Gruppe ausgewählt ist.

29. Verfahren nach Anspruch 28, worin die Temperatur 120 bis 250 °C beträgt und der Druck 689,5 bis 31.026 kPa (100 bis 4.500 psi) beträgt.

30. Verfahren nach Anspruch 29, worin der Aktivator ein Aluminoxan ist, worin R²⁰ aus der aus C₁₋₄-Alkylresten bestehenden Gruppe ausgewählt ist und m = 5 bis 30 ist.

31. Verfahren nach Anspruch 30, worin R²⁰ ein Methylrest ist.

32. Verfahren nach Anspruch 30, worin der Aktivator aus der aus N,N-Dimethyl-aniliniumtetrakispentafluorphenylborat, Triphenylmethyliumtetrakispentafluorphenylborat und Trispentafluorphenylbor bestehenden Gruppe ausgewählt ist.

33. Verfahren nach Anspruch 30, worin der Aktivator eine Kombination aus einem Aktivator, der aus der aus N,N-Dimethylaniliniumtetrakispentafluorphenylborat, Triphenylmethyliumtetrakispentafluorphenylborat und Trispentafluorphenylbor bestehenden Gruppe ausgewählt ist, und einem Aluminiumalkyl ist.

34. Verfahren nach Anspruch 28, worin die Temperatur 20 bis 120 °C beträgt und der Druck 103,4 bis 31.026 kPa (15 bis 4.500 psi) beträgt.

35. Verfahren nach Anspruch 34, worin der Aktivator ein Aluminoxan ist, worin R²⁰ aus der aus C₁₋₄-Alkylresten bestehenden Gruppe ausgewählt ist und m = 5 bis 30 ist.

36. Verfahren nach Anspruch 35, worin R²⁰ ein Methylrest ist.

37. Verfahren nach Anspruch 36, worin der Aktivator aus der aus N,N-Dimethyl-aniliniumtetrakispentafluorphenylborat, Triphenylmethyliumtetrakispentafluorphenylborat und Trispentafluorphenylbor bestehenden Gruppe ausgewählt ist.

38. Verfahren nach Anspruch 36, worin der Aktivator eine Kombination aus einem Aktivator, der aus der aus N,N-Dimethylaniliniumtetrakispentafluorphenylborat, Triphenylmethyliumtetrakispentafluorphenylborat und Trispentafluorphenylbor bestehenden Gruppe ausgewählt ist, und einem Aluminiumalkyl ist.

## Revendications

1. Ligand de formule I: 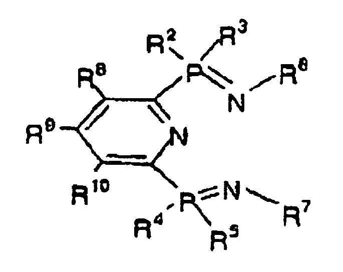 dans laquelle R², R³, R⁴ et R⁵ sont indépendamment choisis dans le groupe consistant en un radical alkyle en C_{1 à 10} et un radical phényle; R⁶ et R⁷ sont indépendamment choisis dans le groupe consistant en des radicaux trialkyl silyle en C_{1 à 16} et des radicaux phényle qui sont non substitués ou substitués par jusqu'à cinq substituants indépendamment choisis dans le groupe consistant en un radical hydrocarbyle en C_{1 à 10}, où deux desdits radicaux hydrocarbyle pris ensemble peuvent former un cycle; et R⁸, R⁹ et R¹⁰ sont indépendamment choisis dans le groupe consistant en un atome d'hydrogène et un radical alkyle en C_{1 à 4}.

2. Ligand selon la revendication 1, dans lequel R², R³, R⁴ et R⁵ sont indépendamment choisis dans le groupe consistant en un radical t-butyle et un radical phényle.

3. Ligand selon la revendication 2, dans lequel R⁶ et R⁷ sont indépendamment choisis dans le groupe consistant en un radical triméthyl silyle et un radical 2,6-diisopropyl phényle.

4. Ligand selon la revendication 3, dans lequel R⁸, R⁹ et R¹⁰ sont un atome d'hydrogène.

5. Ligand selon la revendication 4, dans lequel R⁸, R⁹ et R¹⁰ sont indépendamment choisis dans le groupe consistant en des radicaux alkyle en C_{1 à 4.}

6. Ligand selon la revendication 5, dans lequel R⁸, R⁹ et R¹⁰ sont identiques.

7. Procédé de polymérisation d'une ou plusieurs alpha oléfines en C_{2 à 12} en présence:
(a) d'un complexe comprenant un métal du groupe 8, 9 ou 10 et un ligand de formule I: 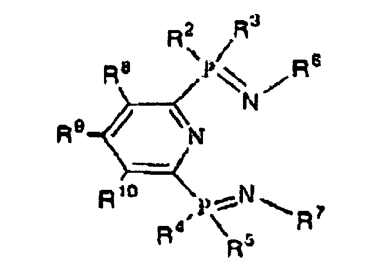 dans laquelle R², R³, R⁴ et R⁵ sont indépendamment choisis dans le groupe consistant en un radical alkyle en C_{1 à 10} et un radical phényle; R⁶ et R⁷ sont indépendamment choisis dans le groupe consistant en des radicaux trialkyl silyle en C_{1 à 16} et des radicaux phényle qui sont non substitués ou substitués par jusqu'à cinq substituants indépendamment choisis dans le groupe consistant en un radical hydrocarbyle en C_{1 à 10}, où deux desdits radicaux hydrocarbyle pris ensemble peuvent former un cycle; et R⁸, R⁹ et R¹⁰ sont indépendamment choisis dans le groupe consistant en un atome d'hydrogène et un radical alkyle en C_{1 à 4}; et
(b) d'un activateur choisi dans le groupe consistant en:
(i) des composés aluminoxane R²⁰₂AlO(R²⁰AlO)ₘAlR²⁰₂ où chaque R²⁰ est indépendamment choisi dans le groupe consistant en un radical hydrocarbyle en C_{1 à 20} et m va de 5 à 30 et où la quantité d'activateur utilisée est telle que le rapport molaire entre l'aluminium et le métal du groupe 8, 9 ou 10 va de 20:1 à 1 000:1;
(ii) des anions de formule [B(R¹⁸)₄]⁻ où chaque R¹⁸ est indépendamment choisi dans le groupe consistant en des radicaux phényle qui sont non substitués ou substitués par jusqu'à cinq substituants choisis dans le groupe consistant en un atome de fluor, un radical alkyle en C_{1 à 4} ou alcoxy qui est non substitué ou substitué par un atome de fluor et un radical silyle de formule -Si(R¹⁹)₃; où chaque R¹⁸ est indépendamment choisi dans le groupe consistant en un atome d'hydrogène et un radical alkyle en C_{1 à 4;} et un activateur de formule [B(R¹⁸)₃ où R¹⁸ est comme défini ci-dessus et où la quantité d'activateur utilisée est telle que le rapport molaire entre le métal du groupe 8, 9 ou 10 et le bore dans [B(R^{1B})₄]⁻ ou [B(R¹⁸)₃] va de 1:1 à 1:3; et
(iii) un mélange d'activateur (i) et (ii) et d'un composé aluminium choisi dans le groupe consistant en les aluminium alkyle de formule AlR₃₋ₙXₙ où R est indépendamment choisi dans le groupe consistant en un radical alkyle en C_{1 à 8}, X est un atome d'halogène et n vaut 0, 1, 2 ou 3 et où la quantité d'activateur utilisée est telle que le rapport entre le métal du groupe 8, 9 ou 10 et l'aluminium par rapport au bore dans [B(R¹⁸)₄]⁻ ou [B(R¹⁸)₃] va de 1:1:1 à 1:100:5;
à une température de 20 à 250 °C et à une pression de 103,4 à 103 400 KPa (15 à 15 000 psi).

8. Procédé selon la revendication 7, dans lequel lesdites une ou plusieurs oléfines sont choisies dans le groupe consistant en l'éthylène, le propylène, le butène, l'hexène et l'octène.

9. Procédé selon la revendication 8, dans lequel M est choisi dans le groupe consistant en Fe, Co, Ni et Pd.

10. Procédé selon la revendication 9, dans lequel R²⁰ est un radical méthyle.

11. Procédé selon la revendication 10, dans lequel R², R³, R⁴ et R⁵ sont indépendamment choisis dans le groupe consistant en un radical t-butyle et un radical phényle.

12. Procédé selon la revendication 11, dans lequel R⁶ et R⁷ sont indépendamment choisis dans le groupe consistant en un radical triméthyl silyle et un radical 2,6-diisopropyl phényle.

13. Procédé selon la revendication 12, dans lequel R⁸, R⁹ et R¹⁰ sont un atome d'hydrogène.

14. Procédé selon la revendication 13, dans lequel R⁸, R⁹ et R¹⁰ sont indépendamment choisis dans le groupe consistant en des radicaux alkyle en C_{1 à 4}.

15. Procédé selon la revendication 14, dans lequel R⁸, R⁹ et R¹⁰ sont identiques.

16. Procédé selon la revendication 15, dans lequel la température va de 120 à 250 °C, la pression va de 689,5 à 31 026 KPa (100 à 4 500 psig), l'activateur est un aluminoxane dans lequel chaque R²⁰ est choisi dans le groupe consistant en des radicaux alkyle en C_{1 à 4} et m va de 5 à 30.

17. Procédé selon la revendication 15, dans lequel la température va de 20 à 120 °C, la pression va de 103,4 à 31 026 KPa (15 à 4 500 psig), l'activateur est un aluminoxane dans lequel chaque R²⁰ est choisi dans le groupe consistant en des radicaux alkyle en C_{1 à 4} et m va de 5 à 30.

18. Procédé selon la revendication 15, dans lequel la température va de 120 à 250 °C, la pression va de 689,5 à 31 026 KPa (100 à 4 500 psig) et l'activateur est choisi dans le groupe consistant en le borate de N,N-diméthylaniliniumtétrakispentafluorophényle, le borate de triphénylméthyliumtétrakispentafluorophényle et le bore de trispentafluorophényle.

19. Procédé selon la revendication 15, dans lequel la température va de 20 à 120 °C, la pression va de 103,4 à 31 026 KPa (15 à 4 500 psig) et l'activateur est choisi dans le groupe consistant en le borate de N,N-diméthylaniliniumtétrakispentafluorophényle, le borate de triphénylméthyliumtétrakispentafluorophényle et le bore de trispentafluorophényle.

20. Procédé selon la revendication 15, dans lequel la température va de 120 à 250 °C, la pression va de 103,4 à 31 026 KPa (15 à 4 500 psig) et l'activateur est une combinaison d'un activateur choisi dans le groupe consistant en le borate de N,N-diméthylaniliniumtétrakispentafluorophényle, le borate de triphénylméthyliumtétrakispentafluorophényle et le bore de trispentafluorophényle et d'un composé aluminium alkyle.

21. Procédé selon la revendication 15, dans lequel la température va de 20 à 120 °C, la pression va de 103,4 à 31 026 KPa (15 à 4 500 psig) et l'activateur est une combinaison d'un activateur ionique choisi dans le groupe consistant en le borate de N,N-diméthylaniliniumtétrakispentafluorophényle, le borate de triphénylméthyliumtétrakispentafluorophényle et le bore de trispentafluorophényle et d'un composé aluminium alkyle.

22. Procédé de réaction d'une ou plusieurs alpha oléfine en C_{2 à 12} en présence d'un catalyseur de formule III: 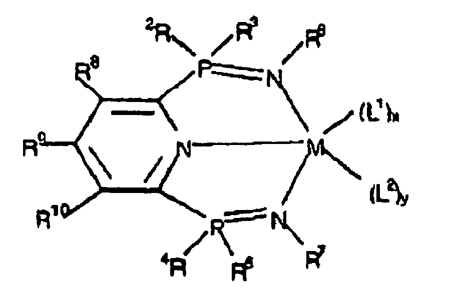 dans laquelle R², R³, R⁴ et R⁵ sont indépendamment choisis dans le groupe consistant en un radical alkyle en C_{1 à 10} et un radical phényle; R⁶ et R⁷ sont indépendamment choisis dans le groupe consistant en des radicaux trialkyl silyle en C_{1 à 16} et des radicaux phényle qui sont non substitués ou substitués par jusqu'à cinq substituants indépendamment choisis dans le groupe consistant en un radical hydrocarbyle en C_{1 à 10}, où deux desdits radicaux hydrocarbyle pris ensemble peuvent former un cycle; et R⁸, R⁹ et R¹⁰ sont indépendamment choisis dans le groupe consistant en un atome d'hydrogène et un radical alkyle en C_{1 à 4}; M est un métal du groupe 8, 9 ou 10; L¹ est un ligand de monodentate neutre qui est seulement lié de manière lâche au métal par une liaison de coordination; L² est choisi dans le groupe consistant en un atome d'hydrogène, un atome d'halogène, un radical hydrocarbyle en C_{1 à 10} et un radical alcoxy en C_{1 à 10}, dont chacun desdits radicaux hydrocarbyle et alcoxy peut être non substitué ou en outre substitué par un atome d'halogène, un radical alkyle en C_{1 à 8}, un radical alcoxy en C_{1 à 8}, un radical aryle en C_{6 à 10} ou un radical aryloxy, un radical amido non substitué ou substitué par jusqu'à deux radicaux alkyle en C_{1 à 8}, ou un radical phosphido non substitué ou substitué par jusqu'à deux radicaux alkyle en C_{1 à 8;} x va de 0 à 12; et y est égal à l'état d'oxydation du métal; avec un activateur choisi dans le groupe consistant en:
(i) des composés aluminoxane R²⁰₂AlO(R²⁰AlO)ₘAlR²⁰₂ où chaque R²⁰ est indépendamment choisi dans le groupe consistant en un radical hydrocarbyle en C_{1 à 20} et m va de 5 à 30 et où la quantité d'activateur utilisée est telle que le rapport molaire entre l'aluminium et le métal du groupe 8, 9 ou 10 va de 20:1 à 1 000:1;
(ii) des anions de formule [B(R¹⁸)₄] - où chaque R¹⁸ est indépendamment choisi dans le groupe consistant en des radicaux phényle qui sont non substitués ou substitués par jusqu'à 5 substituants choisis dans le groupe consistant en un atome de fluor, un radical alkyle en C_{1 à 4} ou alcoxy qui est non substitué ou substitué par un atome de fluor et un radical silyle de formule -Si(R¹⁹)₃; où chaque R¹⁹ est indépendamment choisi dans le groupe consistant en un atome d'hydrogène et un radical alkyle en C_{1 à 4;} et un activateur de formule [B(R¹⁶)₃ où R¹⁶ est comme défini ci-dessus et où la quantité d'activateur utilisée est telle que le rapport molaire entre le métal du groupe 8, 9 ou 10 et le bore dans [B(R¹⁸)⁴] - ou [B(R¹⁸)₃] va de 1:1 à 1:3; et
(iii) un mélange d'activateurs (i) et (ii) et d'un composé aluminium choisi dans le groupe consistant en les aluminium alkyle de formule AlR₃₋ₙXₙ où R est indépendamment choisi dans le groupe consistant en un radical alkyle en C_{1 à 8} et un radical alcoxy en C_{1 à 8}, X est un atome d'halogène et n vaut 0, 1, 2 ou 3 et où la quantité d'activateur utilisée est telle que le rapport entre le métal du groupe 8, 9 ou 10 et l'aluminium et le bore dans [B(R¹⁸)₄]⁻ ou [B(R¹⁸)₃] va de 1:1:1 à 1:100:5;
à une température de 20 à 250 °C et à une pression de 103,4 à 103 400 KPa (15 à 15 000 psi).

23. Procédé selon la revendication 22, dans lequel L¹ est choisi dans le groupe consistant en l'eau et le tétrahydrofurane.

24. Procédé selon la revendication 23, dans lequel L² est choisi dans le groupe consistant en un radical alkyle en C_{1 à 4}, un radical alcoxy en C_{1 à 4} et un atome d'halogène.

25. Procédé selon la revendication 24, dans lequel lesdites une ou plusieurs oléfines sont choisies dans le groupe consistant en l'éthylène, le propylène, le butène, l'hexène et l'octène.

26. Procédé selon la revendication 25, dans lequel R², R³, R⁴ et R⁵ sont des radicaux phényle.

27. Procédé selon la revendication 26, dans lequel le précurseur R⁶ et le précurseur R⁷ sont des radicaux 2,6-diisopropyl phényle.

28. Procédé selon la revendication 27, dans lequel M est choisi dans le groupe consistant en Fe, Co, Ni et Pd.

29. Procédé selon la revendication 28, dans lequel la température va de 120 à 250 °C et la pression va de 689,5 à 31 026 KPa (100 à 4 500 psig).

30. Procédé selon la revendication 29, dans lequel l'activateur est un aluminoxane dans lequel chaque R²⁰ est choisi dans le groupe consistant en des radicaux alkyle en C_{1 à 4} et m va de 5 à 30.

31. Procédé selon la revendication 30, dans lequel R²⁰ est un radical méthyle.

32. Procédé selon la revendication 30, dans lequel l'activateur est choisi dans le groupe consistant en le borate de N,N-diméthylaniliniumtétrakispentafluorophényle, le borate de triphénylméthyliumtétrakispentafluorophényle et le bore de trispentafluorophényle.

33. Procédé selon la revendication 30, dans lequel l'activateur est une combinaison d'un activateur choisi dans le groupe consistant en le borate de N,N-diméthylaniliniumtétrakispentafluorophényle, le borate de triphénylméthyliumtétrakispentafluorophényle et le bore de trispentafluorophényle et d'un aluminium alkyle.

34. Procédé selon la revendication 28, dans lequel la température va de 20 à 120 °C et la pression va de 103,4 à 31 026 KPa (15 à 4 500 psig).

35. Procédé selon la revendication 34, dans lequel l'activateur est un aluminoxane dans lequel chaque R²⁰ est choisi dans le groupe consistant en des radicaux alkyle en C_{1 à 4} et m va de 5 à 30.

36. Procédé selon la revendication 35, dans lequel R²⁰ est un radical méthyle.

37. Procédé selon la revendication 36, dans lequel l'activateur est choisi dans le groupe consistant en le borate de N,N-diméthylaniliniumtétrakispentafluorophényle, le borate de triphénylméthyliumtétrakispentafluorophényle et le bore de trispentafluorophényle.

38. Procédé selon la revendication 36, dans lequel l'activateur est une combinaison d'un activateur choisi dans le groupe consistant en le borate de N,N-diméthylaniliniumtétrakispentafluorophényle, le borate de triphénylméthyliumtétrakispentafluorophényle et le bore de trispentafluorophényle et d'un aluminium alkyle.
